# EUROPEAN PATENT SPECIFICATION

(11) **EP 3 918 174 B1**
(45) Date of publication and mention of the grant of the patent: **04.06.2025**
(21) Application number: 20701366.5
(22) Date of filing: 28.01.2020
(51) Int. Cl.: E06B 3/663, E06B 3/673, C09J 123/22, C08L 23/22

(54) **HOT MELT SINGLE-COMPONENT PRIMARY SEALANT**
HEISSSCHMELZBARES EINKOMPONENTIGES PRIMÄRES DICHTMITTEL
PRODUIT D'ÉTANCHÉITÉ PRIMAIRE MONOCOMPOSANT THERMOFUSIBLE

(30) Priority: 31.01.2019 EP 19154826
(43) Date of publication of application: 08.12.2021
(73) Proprietor: Bostik SA, 92800 Puteaux (FR)
(72) Inventor: MCCREADY, Peadar, Stafford, Staffordshire ST16 3EH (GB); DRUZDZ, Sylwia, Stafford, Staffordshire ST16 3EH (GB); THOMAS, Matthew, Stafford, Staffordshire ST16 3EH (GB); KING, Michael, Stafford, Staffordshire ST16 3EH (GB)
(74) Representative: Arkema Patent
(86) International application number: PCT/EP2020/052055
(87) International publication number: WO 2020/157071

(56) References cited:
- WO-A1-2006/037500
- WO-A1-2017/157634
- WO-A1-2018/054791
- CN-A- 101 805 569

## Description

The present invention relates to a transparent hot melt single-component sealant composition.

The present invention further relates to the use of said sealant composition as a primary sealant in insulating glass (IG) structures, such as windows or doors. Finally, the invention relates to an insulated glass structure or unit, comprising, as a primary sealant, a sealant composition according to the invention.

CN101805569A discloses a transparent hot-melt single component sealant composition. WO2018/054791A1 and WO2017/157634A1 disclose transparent sealant compositions.

Hot melt, single-component, sealant compositions are currently used in the Insulating Glass (IG) sealant market for the manufacture of IG units.

Insulating glass (IG) units are used in a wide variety of applications, such as skylights, high temperature environment viewing windows, architectural windows, fridge doors, just to name a few. IG units are typically utilized to reduce heat transfer, for instance between the inside and outside of a building.

A typical IG unit is formed by two glass sheets (or glass panes) separated near their edges by a spacer with a substantially rectangular cross-section, in order to provide a chamber between the two glass sheets. This chamber is typically filled with a selected insulating atmosphere, such as argon, to enhance the insulating characteristics of the IG unit.

A sealant system is used to bond the two glass sheets to the spacer. The sealant system is expected to provide sufficient structural strength to maintain the unity of the IG unit and also to provide sufficient protection against the insulating atmosphere leaking out of the chamber and/or moisture vapor in the ambient atmosphere outside the IG unit from being transmitted into the chamber. Prevention of outside ambient atmosphere from being transmitted into the chamber is important to avoid the risk of water condensation inside the unit, on the inner surface of the glass pane, which would be detrimental both to the transparency of the IG unit and to its insulation efficiency.

The strength and performance of the IG unit depend heavily upon the sealant system and type of sealant used to secure the glass sheets to the spacer. The majority of sealants currently in use may be divided generally into two major types :
- edge sealants, and
- low Moisture Vapor Transmission Rate (MVTR) sealants.

Edge sealants form a bond between the glass sheet and the spacer and promote the structural integrity of the IG unit. Examples of edge sealants include butyl rubber and thermoset materials, such as polysulfides, polyurethanes, and silicone. These materials have appropriate mechanical properties, in particular a relatively high "modulus" with respect to their stress/strain relationship.

However, these edge sealants generally provide poor MVTR characteristics, and also provide relatively high gas transmission rates. As a result, IG units made only with conventional edge sealants do not generally provide commercially acceptable MVTR characteristics or gas retention properties.

On the other hand, low MVTR sealants, which do not adhere as efficiently to the glass sheets and/or the spacer, provide improved MVTR characteristics and improved gas barrier capabilities compared to edge sealants, but provide little or no structural integrity. Examples of low MVTR sealants include thermoplastic materials, such as hot-melt materials, in particular polyisobutylene (abbreviated hereafter as PIB) based compositions.

To compensate the relative advantages and drawbacks of edge sealants and low MVTR sealants, many sealant systems used in IG units are a "dual-seal" system having two separate or distinct sealant regions :
- a low MVTR sealant (also called "gasket") located essentially between each side region of the spacer and the corresponding inner surface of both glass sheets, also called "primary sealant", and
- an edge sealant located essentially on the outside of the spacer (outer region or edge of the IG unit) to bond the spacer and the 2 glass sheets together ; said sealant being also called "secondary sealant".

The use of hot melt single-component sealant compositions is appreciated by the IG units manufacturers with respect to other technologies based (for instance) on two-component chemically-cured sealant, because of their lack of curing mechanism and ease of application. Indeed, mixing of two-components is not required, staging areas are not required either as in slow cure two-component sealant compositions, and window units can be handled and moved immediately after manufacture.

During the manufacturing of the IG units, hot-melt sealants are generally applied by extrusion to the surface of the panes of glass and/or of the spacer, by means of hot melt pumps and linear extruders at a temperature from 140 to 250°C, preferably at a temperature of from 170 to 200°C, and more preferably at a temperature from 180 to 195°C, for instance by using any suitable applicator including a hand held glue gun, an extruder, a linear extruder or an automated application equipment.

Further, because hot-melt single-component sealant compositions are non-curing and of thermoplastic nature, the adhesive joint which results from their application to the relevant substrate, may have a problem of heat resistance, in particular to the high temperatures (for instance, up to 75°C) which may apply during transport and storage of the final IG units. There is the risk, for instance, that under such a temperature, a primary sealant consisting of a hot-melt, for instance of a PIB based composition, may, when exposed to heat, flow and/or deform excessively within the cavity between the 2 transparent glass panes. This of course would be detrimental both with respect to the esthetics of the IG unit, and to the barrier effect of the primary sealant towards gas and moisture vapor.

The hot-melt single component PIB based sealant compositions which are likely to be used as primary sealant and which are available commercially comprise an inorganic filler which is generally selected from a plurality of materials such as chalks, natural or ground or precipitated calcium carbonate, calcium magnesium carbonates, silicates, talc, and carbon black. The content in said inorganic filler may go from 10 to 60 weight%, and preferably from 15 to 40 weight %, based on the total weight of the sealant.

Owing, in particular, to this inorganic filler, such a hot melt single component PIB based sealant composition is opaque.

Now, as a means of enriching the solutions which may be offered to the IG unit manufacturers, it is an aim of the present invention to propose a hot-melt single component PIB based sealant composition, and its use as a primary sealant, which is transparent while ensuring a proper application performance and resulting in a final IG unit with acceptable heat resistance.

The need for such a transparent sealant derives from the need for obtaining a fully transparent IG unit, in which the spacer bar also consists of a transparent material like glass or a polymer such as PolyMethylMethAcrylate (PMMA) or polycarbonate.

Another aim of the present invention is to propose a transparent hot melt single component sealant composition which provides good application performance by an equipment operating at a temperature from 140 to 250°C, preferably from 170 to 200°C, and more preferably from 180 to 195°C, in particular through an extrusion equipment.

Another aim of the present invention is to propose a transparent hot-melt single component sealant composition which provides, once implemented in an IG unit, an adhesive joint with an improved heat resistance.

Another aim of the present invention is to propose a transparent hot-melt single component sealant composition with good gas and moisture properties, including good MVTR properties.

It has now been found that the above aims can be achieved in all or in part by means of the transparent hot-melt single component sealant composition which is the subject matter of the present invention.

According to a first object of the invention, the present application relates to a transparent hot-melt single component sealant composition, characterized in that it comprises from 70 % to 99 weight % of polyisobutylene, preferably from 73 % to 99 %, based on the total weight of the composition.

Surprisingly, it has been found that said sealant composition is well suited as a primary sealant in IG units, and as the same time may result in a transparent sealant likely to be implemented in a transparent IG unit.

Indeed, it possesses a low MVTR, and more precisely a MVTR less than 0.1 g/m². MVTR was determined according to ASTM E96-90, the test being conducted at 23°C and 92% relative humidity on a sealant film having a thickness of 2 mm.

Further, the sealant composition according to the invention is, due to its flow properties, also well adapted to its application by extrusion to the surface of the panes of glass and/or of the spacer, by means of a conventional application equipment. Such adaptability is assessed by a value of the Melt Flow Index (MFI) greater than 10 g/10 minute, preferably laying in the range from 10 to 70 g/10 minute. MFI is determined according to ASTM D1238 AT 190°C and for a weight of 2.16 kg.

At last, the sealant composition according to the invention advantageously also has a heat resistance which is at least as satisfying and even improved, with respect to known PIB based sealant compositions comprising an inorganic filler. Heat resistance is assessed by measurement of the softening point, also called Ring & Ball method according to ASTM D-36, using silicone oil as medium. The softening point of the present sealant composition is greater than 90°C, and preferably between 100°C and 150 °C.

The content of PIB, as well as of any possible other ingredient, in the sealant composition according to the invention is given in percentage by weight and is expressed relatively to the total weight of the hot melt sealant composition according to the invention.

PIB is widely commercially available, in particular from BASF under such various grades as OPPANOL^{®} B15N, OPPANOL^{®} B12, OPPANOL^{®} B12N, OPPANOL^{®} N50 or GLISSOPAL^{®} V1500 or GLISSOPAL^{®} V640.

Preferably, the composition according to the invention comprises several grades of PIB with different molecular weights.

According to an embodiment, the PIB based sealant composition of the present invention further comprises a thermoplastic polymer selected among polyalkylenes (e.g. polyethylene, polypropylene and polybutylene), poly-alpha-olefin polymer including, e.g. homo-, co- and terpolymers of aliphatic mono-1-olefins (alpha olefins) (e.g. C₂ to C₁₀ poly(alpha)olefins), homogeneous linear or substantially linear interpolymers of ethylene having at least one C₃ to C₂₀ alphaolefin, poly(alkylene oxides), poly(phenylenediamine terephthalamide), polyesters (e.g. polyethylene terephthalate), polyacrylates, polymethacrylates, polyacrylamides, polyacrylonitriles, copolymers of acrylonitrile and monomers including, e.g. butadiene, styrene, polymethyl pentene, and polyphenylene sulfide (e.g. styrene-acrylonitrile, acrylonitrile-butadiene-styrene, acrylonitrile-styrene-butadiene rubbers), polyimides, polyamides, copolymers of vinyl alcohol and ethylenically unsaturated monomers, polyvinyl acetate (e.g. ethylene vinyl acetate), polyvinyl alcohol, vinyl chloride homopolymers and copolymers (e.g. polyvinyl chloride), terpolymers of ethylene, carbon monoxide and acrylic acid ester or vinyl monomer, polysiloxanes, polyurethanes, polystyrene, and combinations thereof, and homopolymers, copolymers and terpolymers thereof, and mixtures thereof. Other useful classes of thermoplastic polymers include asphalts, bitumens, crude rubbers, fluorinated rubbers, and cellulosic resins.

According to a preferred embodiment, the thermoplastic polymer is selected among amorphous poly-alpha-olefin polymer, and preferably a propylene-based polymer selected from homopolymers of propylene or copolymers of propylene with one or more C₂ to C₁₀ alpha-olefins comonomers, copolymer of ethylene and vinyl acetate, copolymer of ethylene and ethyl acrylate, copolymer of ethylene and acrylic acid, polyethylene, polypropylene, polyamide, styrene-butadiene-styrene and styrene-isoprene-styrene block copolymers, and mixtures thereof.

According to a more preferred embodiment, the thermoplastic polymer is a copolymer of ethylene and vinyl acetate. Use can be made, as an example, of commercial grades EVATANE ^{®} 28-420 and EVATANE ^{®} 28-25 which can be obtained from Arkema.

The sealant composition according to the invention may advantageously comprise from 0.5 to 10 weight %, and preferably from 1 to 5 %, of the thermoplastic polymer, based on the total weight of the sealant composition.

According to another embodiment, the PIB based sealant composition of the present invention further comprises a transparent tackifying resin selected among the following classes :
(a) natural and modified rosins such as, for example, gum rosins, wood rosins, tall-oil rosins, distilled rosins, hydrogenated rosins, dimerized rosins and polymerized rosins;
(b) glycerol and pentaerythritol esters of natural and modified rosins, such as, for example, the glycerol esters of pale wood rosin, the glycerol esters of hydrogenated rosin, the glycerol esters of polymerized rosin, the pentaerythritol esters of pale wood rosin, the pentaerythritol esters of hydrogenated rosin, the pentaerythritol esters of tall oil rosin and the phenolic modified pentaerythritol esters of rosin;
(c) polyterpene resins including hydrogenated polyterpene resins having a Ring and Ball softening point of from about 20°C to 140°C, the latter polyterpene resins generally resulting from the polymerization of terpene hydrocarbons, such as the monoterpene known as pinene, in the presence of Friedel-Crafts catalysts at moderately low temperatures;
(d) phenolic-modified terpene resins such as, for example, those resulting from the condensation, in an acidic medium, of a terpene and a phenol;
(e) aliphatic (including cycloaliphatic) petroleum hydrocarbon resins (C5) having a Ring and Ball softening point of from about 60°C to 140°C, said resins resulting from the polymerization of C5-hydrocarbon monomers; and the corresponding hydrogenated derivatives resulting from a subsequent total or partial hydrogenation thereof;
(f) aromatic petroleum hydrocarbons resins (C9) having Ring and Ball softening point of from about 60°C to 140°C, said resins resulting from the polymerization of C9-hydrocarbon monomers; and the corresponding hydrogenated derivatives resulting from a subsequent total or partial hydrogenation thereof;
(g) aliphatic (including cycloaliphatic) and/or aromatic petroleum resins (C5/C9) having a Ring and Ball softening point of from about 60°C to 140°C, said resins resulting from the polymerization of C5/C9-hydrocarbon monomers; and the corresponding hydrogenated derivatives resulting from a subsequent total or partial hydrogenation thereof.

According to a preferred embodiment, the tackifying resin belongs to classes (e) or (g).

According to another preferred embodiment, the tackifying resin does not comprise carbon-carbon double bond. In this latter case, the saturated tackifying resin(s) may be prepared by full hydrogenation of the insaturated tackifying resin(s).

According to another preferred embodiment, the tackifying resin possesses a softening point greater that 90°C, preferably between 100°C and 140°C.

Tackifying resins are easily available commercially. As an example one may cite SUKOREZ^{®} SU-525 from KOLON, which is a hydrogenated cycloaliphatic resin with a R&B of about 125°C which results from the polymerization of C5-hydrocarbon monomers.

According to an embodiment, the PIB based sealant composition of the present invention further comprises an antioxidant stabilizer to protect the sealant composition according to the present invention from degradation induced by heat, light, UV radiations, during processing and storage. Several types of antioxidants can be used, either primary antioxidants like hindered phenols or secondary antioxidants like phosphite derivatives or blends thereof. Among commercial products, use can be made of Irganox^{®} 1010 from BASF and Topanol^{®} O from VERTELLUS.

The antioxidant stabilizer is preferably present in an amount of from 0.05 to 3 weight %, preferably from 0.1 to 1 %, based on the total weight of the sealant composition.

The sealant composition according to the invention may also include an adhesion promoter selected among an epoxy-based silane and an amino-based silane, in an amount of from 0.1 to 2 weight %, preferably from 0.1 to 1 %, based on the total weight of the sealant composition. Among the possible commercial adhesion promoters, one can cite Silquest^{®} A187 from Momentive.

The sealant composition according to the invention may at last include minor amounts of other additives such as UV absorbers, waxes, lubricants, catalysts, rheology modifiers, biocides, corrosion inhibitors, dehydrators, surfactants, nucleating agents, flame retardants, and combinations thereof. A typical range of such minor amounts is between 0.1 and 2 weight %.

According to a particularly preferred embodiment, the sealant composition according to the invention comprises, and preferably consists essentially of :
- from 90 % to 99 weight %, preferably from 95 % to 99 %, of polyisobutylene ; and
- from 1 to 10 weight %, preferably from 1 to 5 %, of a copolymer of ethylene and vinyl acetate ;
based on the total weight of the sealant composition.

According to another particularly preferred embodiment, the sealant composition according to the invention comprises, and preferably consists essentially of :
- from 70 % to 80 weight %, preferably from 73 % to 78 % of polyisobutylene; and
- from 20 % to 30 weight %, preferably from 22 % to 27 % of the tackfying resin, such as previously defined ;
based on the total weight of the sealant composition.

The method for preparing a sealant composition according to the invention comprises:
- adding a part of PIB, a part of the thermoplastic polymer(s) or tackifying resin (when present), antioxidant stabilizer(s), in a mixing device,
- heating the content of the mixing device under vacuum to a temperature comprised between 100°C and 160°C, and preferably greater than 120°C, then
- adding a part of thermoplastic polymer(s) or tackifying resin, mixing until the mixture is uniform before adding the remaining of thermoplastic polymer(s) (or tackifying resin) and PIB, and possibly the adhesion promoter.

The mixture is maintained under vacuum during 1 to 2 hours, at the same temperature, until the ingredients are melted and uniformly blended.

According to a second object of the invention, the present application relates to the use of the transparent hot-melt single component sealant composition according to the invention as a primary sealant (or gasket) in a manufacturing process of IG units, such as windows or doors.

IG units are formed by two glass sheets (or glass panes) separated near their edges by a spacer with a substantially rectangular cross-section, in order to provide a chamber between the two glass sheets. This chamber is typically filled with a selected insulating atmosphere, such as argon, to enhance the insulating characteristics of the IG unit. The primary sealant is located essentially between each side region of the spacer and the corresponding inner surface of both glass sheets.

According to a third object of the invention, the present application relates to an Insulating Glass unit (1) comprising :
- a first pane of glass (11),
- a second pane of glass (12),
- a spacer (3) positioned between the inner surface (21) of the first pane of glass (11) and the inner surface (22) of the second pane of glass (12), and
- a sealant system (5) for adhering the inner surfaces (21), (22) of the glass panes (11), (12) to the spacer (3), which comprises a primary sealant (51) located in the side regions (32), (33) of the spacer (3) and a secondary sealant (52) located in the outer region of the spacer (3),
characterized in that the primary sealant (51) is composed of the transparent hot-melt single component sealant composition according to the invention.

### BRIEF DESCRIPTION OF THE FIGURE

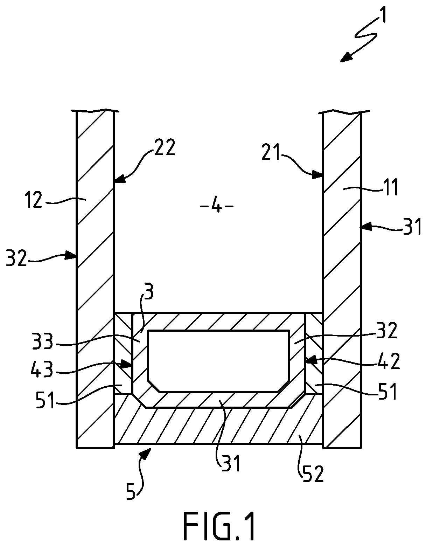

FIG. 1 is a cross-section of an elevational view of a portion of an edge assembly of an IG unit having a primary sealant according to the invention.

In reference to figure 1, the IG unit (1) has a first pane (11) having an inner surface (21) and an outer surface (31). The first pane (11) is spaced from a second pane (12) which also has an inner surface (22) and an outer surface (32). The two panes (11) and (12) may be of any transparent material conventionally used in the IG unit art, for instance clear float glass.

The inner surface (21) of the first pane (11) faces the inner surface (22) of the second pane (12), and the inner surfaces (21) and (22) are spaced apart by a spacer (3) which is attached, ie adhesively bonded, to the two panes (11) and (12) by a sealant system (5).

The spacer (3) may be any of the type used in the IG unit art, such as a conventional rigid spacer, with an essentially rectangular cross-section. In the illustrative embodiment shown in FIG. 1 but not to be considered as limiting to the invention, the spacer (3) is depicted as having a base (31) with a first side (32) and a second side (33) extending from the base (31). Each side (32), (33) includes an outer surface (42), (43) facing the inner surfaces (21), (22) of the respective adjacent panes (11), (12).

The two panes (11) and (12) and the spacer (3) define a chamber (4) or "dead space" between the two panes (11) and (12). The chamber (4) can be filled with an insulating atmosphere, such as air or argon or krypton gas.

Preferably, the spacer (3) comprised in the IG unit according to the invention has a substantially rectangular cross-section.

The sealant composition according to the invention is used in a dual seal system (5) having two separate or distinct regions : an outer or secondary sealant (52) and an inner or primary sealant (51), wherein the sealant composition according to the invention is used to form the primary sealant (51).

The primary sealant (51) is located mainly in the side regions of the spacer (3), namely the majority of the sealant is located between the outer surfaces (42), (43) of each side (32), (33) and the inner surfaces (21), (22) of the respective adjacent panes (11), (12).

The secondary sealant (52) preferably extends across the width of the outside of the spacer (3) (outer region), e.g. extends across the perimeter groove formed by the outer surface of the base (31) of the spacer (3) and the outer marginal edges of the inner surfaces (21) and (22) of the panes (11) and (12).

The sealants (51), (52) may be of any suitable dimensions to adhere the panes (11), (12) to the spacer (3).

According to a preferred embodiment, the secondary sealant (52) is a conventional edge sealant, such as a conventional thermoset sealant material. For example, the secondary sealant (52) can comprise one or more conventional silicone, polyurethane, polysulfide or butyl rubber based edge sealant materials as are known in the art.

The sealant composition according to the invention may be applied, as a primary sealant, to the surface of the panes of glass by hot melt pumps and linear extruders at a temperature from 140 to 250°C, preferably at a temperature of from 170 to 200°C, and more preferably at a temperature from 180 to 195°C, for instance by using any suitable applicator including a hand held glue gun, extruder, linear extruder, other forms of extruder beads, automated application equipment, and combinations thereof.

The following examples are given purely by way of illustration of the invention and should not, under any circumstances, be interpreted as limiting the scope thereof.

The test procedures used in the examples are the following:

### Moisture Vapor Transmission Rate (MVTR):

The MVTR was determined according to ASTM E96-90. The test was conducted at 23°C and 92% relative humidity on a sealant film having a thickness of 2 mm. Said film was sealed to the open mouth of a test dish containing a desiccant. The assembly was placed in the controlled atmosphere. Periodic weighings determined the rate of moisture vapour movement through the sealant film into the desiccant.

### Melt Flow Index (MFI):

The MFI was determined according to ASTM D1238. The MFI is the weight of composition (placed beforehand in a vertical cylinder) which flows in 10 minutes through a die having a fixed diameter, under the effect of a pressure exerted by a loaded piston having a total weight of 2.16 kg.

### Softening point:

The softening point is determined by the Ring & Ball method according to ASTM D-36, using silicone oil as a medium, the principle of which is as follows. A brass ring about 2 cm in diameter is filled with the resin to be tested in the melt state. After cooling to room temperature, the ring and the solid resin are placed horizontally in a thermostatted glycerol bath, the temperature of which may vary by 5°C per minute. A steel ball about 9.5 mm in diameter is centered on the solid resin disk. The softening temperature is, during the rise in temperature of the bath at a rate of 5°C per minute, the temperature at which the resin disk flows by an amount of 25.4 mm under the weight of the ball.

The raw materials used in the examples are listed in Table 1:

### Example A (Reference) : PIB based sealant composition comprising an inorganic filler

The composition of example A in Table 1 is prepared as follows.

A part of PIB and antioxidant stabilizer are added in a mixing device, and are heated to a temperature comprised between 100°C and 160°C. Then carbon black is added to the mixing device, the content of which is mixed under vacuum until the mixture is uniform before adding the remaining PIB, ground calcium carbonate and wax.

The mixture is maintained under vacuum during a period of time from about 30min to 1h, at the same temperature, until the ingredients are melted and uniformly blended.

This composition is opaque.

It is tested according to the Melt Flow Index, softening point and MVTR tests, as described above.

The results are given in Table 1.

### Examples 1 to 3 (according to the invention) :

The composition of examples 1-3 in Table 1 are prepared as pointed out above.

They are found to be transparent.

They are tested according to the Melt Flow Index, softening point and MVTR tests, as described above.

The results are given in Table 1.

The values obtained for the softening point correspond to a significantly improved heat resistance with respect to example A.

**Table 1**

| **Ingredients** | **Trade name** | **Supplier** | **Ex. A (ref.)** | **Ex. 1** | **Ex. 2** | **Ex. 3** |
|---|---|---|---|---|---|---|
| Polyisobutylene (PIB) | OPPANOL^{®} B15N | BASF | 46.51 | 72.15 | 69.22 | 13.76 |
| Polyisobutylene (PIB) | OPPANOL^{®} B12 | BASF | 13.08 | 20.19 | 9.48 | - |
| Polyisobutylene (PIB) | OPPANOL^{®} N50 | BASF | - | 5 | 13.27 | 32.10 |
| Polyisobutylene (PIB) | GLISSOPAL^{®} V1500 | BASF | - | - | 4.74 | - |
| Polyisobutylene (PIB) | GLISSOPAL^{®} V640 | BASF | - | - | - | 28.67 |
| Copolymer of ethylene and vinyl acetate | EVATANE^{®} 28-420 | ARKEMA | - | 2.50 | - | - |
| Copolymer of ethylene and vinyl acetate | EVATANE^{®} 28-25 | ARKEMA | - | - | 2.37 | - |
| Hydrogenated cycloaliphatic resin (R&B of about 125°C) | SUKOREZ^{®} SU-525 | KOLON | - | - | - | 24.08 |
| Pentaerythritol tetrakis(3,5-di-tert-butyl-4-hydroxyhydrocinnamate) | Irganox^{®} 1010 | BASF | - | 0.15 | 0.14 | 0.23 |
| Butylated hydroxytoluene | Topanol^{®} O | VERTELLUS | 0.01 | 0.01 | 0.02 | 0.02 |
| 3-Glycidoxypropyltrimethoxysilane | Silquest^{®} A-187 | MOMENTIVE | - | - | 0.52 | - |
| Fumed silica | Aerosil^{®} 300 | EVONIK | - | - | 0.24 | 1.14 |
| Ground Calcium Carbonate (d₅₀ = 3,4 µm) | PolCarb^{®} 29 | IMERYS | 33.43 | - | - | - |
| Carbon black | Continex^{®} N550 | CONTINENTAL CARBON | 4.98 | - | - | - |
| Wax | Sasolwax^{®} H1 | SASOL | 1.99 | - | - | - |

| **Aspect** | opaque | transparent | transparent | transparent |
|---|---|---|---|---|
| **MVTR (g/m²)** | 0.05 | 0.06 | 0.06 | 0.05 |
| **Melt Flow Index (g/10 minutes)** | 55 | 45 | 25 | 17 |
| **Softening point (°C)** | 102 | 104 | 119 | 148 |

## Claims

1. Transparent hot-melt single component sealant composition, **characterized in that** it comprises from 70 % to 99 weight % of polyisobutylene, preferably from 73 % to 99 %, based on the total weight of the composition.

2. Transparent hot-melt single component sealant composition according to claim 1, **characterized in that** it further comprises a thermoplastic polymer selected among polyalkylenes, poly-alpha-olefin polymers, poly(alkylene oxides), poly(phenylenediamine terephthalamide), polyesters, polyacrylates, polymethacrylates, polyacrylamides, polyacrylonitriles, copolymers of acrylonitrile, polyimides, polyamides, copolymers of vinyl alcohol and ethylenically unsaturated monomers, polyvinyl acetate, polyvinyl alcohol, vinyl chloride homopolymers and copolymers, terpolymers of ethylene, carbon monoxide and acrylic acid ester or vinyl monomer, polysiloxanes, polyurethanes, polystyrene.

3. Transparent hot-melt single component sealant composition according to claim 2, **characterized in that** the thermoplastic polymer is a copolymer of ethylene and vinyl acetate.

4. Transparent hot-melt single component sealant composition according to either one of claims 2 or 3, **characterized in that** it comprise from 0.5 to 10 weight %, and preferably from 1 to 5 %, of the thermoplastic polymer, based on the total weight of the sealant composition.

5. Transparent hot-melt single component sealant composition according to either one of claims 1 to 4, **characterized in that** it further comprises a transparent tackifying resin selected among the following classes :
(a) natural and modified rosins;
(b) glycerol and pentaerythritol esters of natural and modified rosins;
(c) polyterpene resins ;
(d) phenolic-modified terpene resins;
(e) aliphatic petroleum hydrocarbon resins (C5) having a Ring and Ball softening point of from about 60°C to 140°C, said resins resulting from the polymerization of C5-hydrocarbon monomers; and the corresponding hydrogenated derivatives resulting from a subsequent total or partial hydrogenation thereof;
(f) aromatic petroleum hydrocarbons resins (C9) having Ring and Ball softening point of from about 60°C to 140°C, said resins resulting from the polymerization of C9-hydrocarbon monomers; and the corresponding hydrogenated derivatives resulting from a subsequent total or partial hydrogenation thereof;
(g) aliphatic and/or aromatic petroleum resins (C5/C9) having a Ring and Ball softening point of from about 60°C to 140°C, said resins resulting from the polymerization of C5/C9-hydrocarbon monomers; and the corresponding hydrogenated derivatives resulting from a subsequent total or partial hydrogenation thereof.

6. Transparent hot-melt single component sealant composition according to either one of claims 1 to 5, **characterized in that** it further comprises an antioxidant stabilizer, preferably in an amount of from 0.05 to 3 weight % based on the total weight of the sealant composition.

7. Transparent hot-melt single component sealant composition according to either one of claims 1 to 6, **characterized in that** it further comprises an adhesion promoter selected among an epoxy-based silane and an amino-based silane, preferably in an amount of from 0.1 to 2 weight %, based on the total weight of the sealant composition.

8. Transparent hot-melt single component sealant composition according to either one of claims 1 to 4, **characterized in that** it comprises, and preferably consists essentially of :
- from 90 % to 99 % of polyisobutylene ; and
- from 1 to 10 % of a copolymer of ethylene and vinyl acetate ;
based on the total weight of the sealant composition.

9. Transparent hot-melt single component sealant composition according to claim 5, **characterized in that** it comprises, and preferably consists essentially of :
- from 70 % to 80 weight % of polyisobutylene; and
- from 20 % to 30 weight %, of the tackfying resin ;
based on the total weight of the sealant composition.

10. Use of the transparent hot-melt single component sealant composition such as defined in either one of claims 1 to 9 as a primary sealant in a manufacturing process of Insulating Glass units.

11. Insulating Glass unit (1) comprising :
- a first pane of glass (11),
- a second pane of glass (12),
- a spacer (3) positioned between an inner surface (21) of the first pane of glass (11) and an inner surface (22) of the second pane of glass (12), and
- a sealant system (5) for adhering the inner surfaces (21), (22) of the glass panes (11), (12) to the spacer (3), which comprises a primary sealant (51) located in the side regions (32), (33) of the spacer (3) and a secondary sealant (52) located in the outer region of the spacer (3),
**characterized in that** the primary sealant (51) is composed of the transparent hot-melt single component sealant composition such as defined in either one of claims 1 to 9.

12. Insulating Glass unit (1) according to claim 11, **characterized in that** the spacer (3) has a substantially rectangular cross-section.

## Patentansprüche

1. Transparente Einkomponenten-Hotmelt-Dichtstoffzusammensetzung, **dadurch gekennzeichnet, dass** sie von 70 bis 99 Gew.-% Polyisobutylen, vorzugsweise von 73 bis 99 Gew.-%, bezogen auf das Gesamtgewicht der Zusammensetzung, umfasst.

2. Transparente Einkomponenten-Hotmelt-Dichtstoffzusammensetzung nach Anspruch 1, **dadurch gekennzeichnet, dass** sie ferner ein thermoplastisches Polymer ausgewählt aus Polyalkylenen, Poly-alphaolefinpolymeren, Poly(alkylenoxiden), Poly(phenylendiaminterephthalamid), Polyestern, Polyacrylaten, Polymethacrylaten, Polyacrylamiden, Polyacrylnitrilen, Copolymeren von Acrylnitril, Polyimiden, Polyamiden, Copolymeren von Vinylalkohol und ethylenisch ungesättigten Monomeren, Polyvinylacetat, Polyvinylalkohol, Vinylchloridhomo- und -copolymeren, Terpolymeren von Ethylen, Kohlenmonoxid und Acrylsäureester oder Vinylmonomer, Polysiloxanen, Polyurethanen, Polystyrol umfasst.

3. Transparente Einkomponenten-Hotmelt-Dichtstoffzusammensetzung nach Anspruch 2, **dadurch gekennzeichnet, dass** das thermoplastische Polymer ein Copolymer von Ethylen und Vinylacetat ist.

4. Transparente Einkomponenten-Hotmelt-Dichtstoffzusammensetzung nach einem der Ansprüche 2 oder 3, **dadurch gekennzeichnet, dass** sie von 0,5 bis 10 Gew.-%, vorzugsweise von 1 bis 5 %, an dem thermoplastischen Polymer, bezogen auf das Gesamtgewicht der Dichtmasse, umfasst.

5. Transparente Einkomponenten-Hotmelt-Dichtstoffzusammensetzung nach einem der Ansprüche 1 bis 4, **dadurch gekennzeichnet, dass** sie ferner ein transparentes klebrigmachendes Harz ausgewählt aus den folgenden Klassen umfasst:
(a) natürliches und modifiziertes Kolophonium;
(b) Glycerol- und Pentaerythritester von natürlichem und modifiziertem Kolophonium;
(c) Polyterpenharze;
(d) phenolisch modifizierte Terpenharze;
(e) aliphatische Erdölkohlenwasserstoffharze (C5) mit einem Ring-und-Kugel-Erweichungspunkt von etwa 60 °C bis 140 °C, wobei die Harze aus der Polymerisation von C5-Kohlenwasserstoffmonomeren stammen; und die entsprechenden hydrierten Derivate, die aus einer nachfolgenden Gesamt- oder Teilhydrierung davon stammen;
(f) aromatische Erdölkohlenwasserstoffharze (C9) mit einem Ring-und-Kugel-Erweichungspunkt von etwa 60 °C bis 140 °C, wobei die Harze aus der Polymerisation von C9-Kohlenwasserstoffmonomeren stammen; und die entsprechenden hydrierten Derivate, die aus einer nachfolgenden Gesamt- oder Teilhydrierung davon stammen;
(g) aliphatische und/oder aromatische Erdölharze (C5/C9) mit einem Ring-und-Kugel-Erweichungspunkt von etwa 60 °C bis 140 °C, wobei die Harze aus der Polymerisation von C5/C9-Kohlenwasserstoffmonomeren stammen; und die entsprechenden hydrierten Derivate, die aus einer nachfolgenden Gesamt- oder Teilhydrierung davon stammen.

6. Transparente Einkomponenten-Hotmelt-Dichtstoffzusammensetzung nach einem der Ansprüche 1 bis 5, **dadurch gekennzeichnet, dass** sie ferner einen Antioxidationsstabilisator umfasst, vorzugsweise in einer Menge von 0,05 bis 3 Gew.-%, bezogen auf das Gesamtgewicht der Dichtstoffzusammensetzung.

7. Transparente Einkomponenten-Hotmelt-Dichtstoffzusammensetzung nach einem der Ansprüche 1 bis 6, **dadurch gekennzeichnet, dass** sie ferner einen Haftvermittler ausgewählt aus einem Silan auf Epoxybasis und einem Silan auf Aminobasis umfasst, vorzugsweise in einer Menge von 0,1 bis 2 Gew.-%, bezogen auf das Gesamtgewicht der Dichtstoffzusammensetzung.

8. Transparente Einkomponenten-Hotmelt-Dichtstoffzusammensetzung nach einem der Ansprüche 1 bis 4, **dadurch gekennzeichnet, dass** sie umfasst und vorzugsweise im Wesentlichen daraus besteht:
- von 90 % bis 99 % Polyisobutylen; und
- von 1 bis 10 % an einem Copolymer von Ethylen und Vinylacetat;
bezogen auf das Gesamtgewicht der Dichtstoffzusammensetzung.

9. Transparente Einkomponenten-Hotmelt-Dichtstoffzusammensetzung nach Anspruch 5, **dadurch gekennzeichnet, dass** sie umfasst und vorzugsweise im Wesentlichen daraus besteht:
- von 70 bis 80 Gew.-% Polyisobutylen; und
- von 20 bis 30 Gew.- % an dem klebrigmachenden Harz; bezogen auf das Gesamtgewicht der Dichtstoffzusammensetzung.

10. Verwendung der transparenten Einkomponenten-Hotmelt-Dichtstoffzusammensetzung nach einem der Ansprüche 1 bis 9 als primären Dichtstoff bei einem Verfahren zur Herstellung von Isolierglaseinheiten.

11. Isolierglaseinheit (1) umfassend:
- eine erste Glasscheibe (11),
- eine zweite Glasscheibe (12),
- einen Abstandshalter (3), der zwischen einer inneren Oberfläche (21) der ersten Glasscheibe (11) und einer inneren Oberfläche (22) der zweiten Glasscheibe (12) angeordnet ist, und
- ein Dichtstoffsystem (5) zum Kleben der inneren Oberflächen (21), (22) der Glasscheiben (11), (12) an den Abstandshalter (3), das einen in den Seitenbereichen (32), (33) des Abstandshalters (3) angeordneten primären Dichtstoff (51) und einen in dem Außenbereich des Abstandshalters (3) angeordneten sekundären Dichtstoff (52) umfasst,
**dadurch gekennzeichnet, dass** der primäre Dichtstoff (51) aus der transparenten Einkomponenten-Hotmelt-Dichtstoffzusammensetzung nach einem der Ansprüche 1 bis 9 besteht.

12. Isolierglaseinheit (1) nach Anspruch 11, **dadurch gekennzeichnet, dass** der Abstandshalter (3) einen im Wesentlichen rechteckigen Querschnitt aufweist.

## Revendications

1. Composition d'agent de scellement monocomposant thermofusible transparente, **caractérisée en ce qu'**elle contient de 70 % à 99 % en poids de polyisobutylène, de préférence de 73 % à 99 % en poids, par rapport au poids total de la composition.

2. Composition d'agent de scellement monocomposant thermofusible transparente selon la revendication 1, **caractérisée en ce qu'**elle contient en outre un polymère thermoplastique choisi parmi des polyalkylènes, des polymères de type polyalphaoléfine, des poly(oxyde d'alkylène), des poly(phénylènediamine téréphtalamide), des polyesters, des polyacrylates, des polyméthacrylates, des polyacrylamides, des polyacrylonitriles, des copolymères d'acrylonitrile, des polyimides, des polyamides, des copolymères d'alcool vinylique et de monomères éthyléniquement insaturés, un poly(acétate de vinyle), un poly(alcool vinylique), des homopolymères et copolymères de chlorure de vinyle, des terpolymères d'éthylène, du monoxyde de carbone et d'ester d'acide acrylique ou un monomère vinylique, des polysiloxanes, des polyuréthanes, un polystyrène.

3. Composition d'agent de scellement monocomposant thermofusible transparente selon la revendication 2, **caractérisée en ce que** le polymère thermoplastique est un copolymère d'éthylène et d'acétate de vinyle.

4. Composition d'agent de scellement monocomposant thermofusible transparente selon l'une ou l'autre des revendications 2 ou 3, **caractérisée en ce qu'**elle contient de 0,5 à 10 % en poids, de préférence de 1 à 5 %, du polymère thermoplastique, par rapport au poids total de la composition d'agent de scellement.

5. Composition d'agent de scellement monocomposant thermofusible transparente selon l'une quelconque des revendications 1 à 4, **caractérisée en ce qu'**elle comprend en outre une résine tackifiante transparente choisie parmi les classes suivantes :
(a) rosines naturelles et modifiées ;
(b) esters de glycérol et de pentaérythritol de rosines naturelles et modifiées ;
(c) résines de polyterpène ;
(d) résines de terpène modifiées par des phénols ;
(e) résines d'hydrocarbures de pétrole aliphatiques (C5) ayant un point de ramollissement anneau et bille d'environ 60 °C à 140 °C, lesdites résines résultant de la polymérisation de monomères d'hydrocarbures en C5 ; et les dérivés hydrogénés correspondants résultant d'une hydrogénation totale ou partielle subséquente de celles-ci ;
(f) résines d'hydrocarbures de pétrole aromatiques (C9) ayant un point de ramollissement anneau et bille d'environ 60 °C à 140 °C, lesdites résines résultant de la polymérisation de monomères d'hydrocarbures en C9 ; et les dérivés hydrogénés correspondants résultant d'une hydrogénation totale ou partielle ultérieure de celles-ci ;
(g) résines de pétrole aliphatiques et/ou aromatiques (C5/C9) ayant un point de ramollissement anneau et bille d'environ 60 °C à 140 °C, lesdites résines résultant de la polymérisation de monomères d'hydrocarbures en C5/C9 ; et les dérivés hydrogénés correspondants résultant d'une hydrogénation totale ou partielle ultérieure de celles-ci.

6. Composition d'agent de scellement monocomposant thermofusible transparente selon l'une quelconque des revendications 1 à 5, **caractérisée en ce qu'**elle contient en outre un stabilisant antioxydant, de préférence en une quantité de 0,05 à 3 % en poids par rapport au poids total de la composition d'agent de scellement.

7. Composition d'agent de scellement monocomposant thermofusible transparente selon l'une quelconque des revendications 1 à 6, **caractérisée en ce qu'**elle contient en outre un promoteur d'adhérence choisi parmi un silane à base d'époxy et un silane à base d'amino, de préférence en une quantité de 0,1 à 2 % en poids, par rapport au poids total de la composition d'agent de scellement.

8. Composition d'agent de scellement monocomposant thermofusible transparente selon l'une quelconque des revendications 1 à 4, **caractérisée en ce qu'**elle contient et de préférence est constituée essentiellement de :
- de 90 % à 99 % de polyisobutylène ; et
- de 1 à 10 % d'un copolymère d'éthylène et d'acétate de vinyle ;
sur la base du poids total de la composition d'agent de scellement.

9. Composition d'agent de scellement monocomposant thermofusible transparente selon la revendication 5, **caractérisée en ce qu'**elle contient et de préférence est constituée essentiellement de :
- de 70 % à 80 % en poids de polyisobutylène ; et
- de 20 % à 30 % en poids de la résine tackifiante ;
sur la base du poids total de la composition d'agent de scellement.

10. Utilisation de la composition d'agent de scellement monocomposant thermofusible transparente telle que définie dans l'une quelconque des revendications 1 à 9 comme agent de scellement primaire dans un procédé de fabrication d'unités de verre isolant.

11. Unité de verre isolant (1) comprenant :
- une première vitre (11),
- une deuxième vitre (12),
- une entretoise (3) placée entre une surface intérieure (21) de la première vitre (11) et une surface intérieure (22) de la seconde vitre (12), et
- un système de scellement (5) pour coller les surfaces intérieures (21), (22) des vitres (11), (12) sur l'entretoise (3), qui comprend un matériau de scellement primaire (51) situé dans les zones latérales (32), (33) de l'entretoise (3) et un matériau de scellement secondaire (52) situé dans la zone extérieure de l'entretoise (3),
**caractérisée en ce que** le matériau de scellement primaire (51) est composé de la composition de matériau de scellement monocomposant thermofusible transparente telle que définie dans l'une quelconque des revendications 1 à 9.

12. Unité de verre isolant (1) selon la revendication 11, **caractérisée en ce que** l'entretoise (3) présente une section transversale sensiblement rectangulaire.
